Europäisches Patentamt

European Patent Office

Office européen des brevets

(11) Veröffentlichungsnummer: **0 390 180**
**A2**

(12) **EUROPÄISCHE PATENTANMELDUNG**

(21) Anmeldenummer: **90106090.5**

(22) Anmeldetag: **30.03.90**

(51) Int. Cl.5: **G01C 19/66**

(30) Priorität: **30.03.89 FR 8904172**

(43) Veröffentlichungstag der Anmeldung:
**03.10.90 Patentblatt 90/40**

(84) Benannte Vertragsstaaten:
**DE GB IT**

(71) Anmelder: **TELDIX GmbH**
**Grenzhöfer Weg 36 Postfach 105608**
**D-6900 Heidelberg 1(DE)**

(72) Erfinder: **de Salaberry, Bernard Lucien**
**Charles**
**4 Bis, rue de la Ceinture**
**F-78000 Versailles(FR)**

(74) Vertreter: **Kammer, Arno, Dipl.-Ing.**
**TELDIX GmbH Postfach 10 56 08 Grenzhöfer**
**Weg 36**
**D-6900 Heidelberg 1(DE)**

(54) **Positionsmessvorrichtung für Lichtstrahlen von Laserkreiseln.**

(57) Die Erfindung betrifft eine Positionsmeßvorrichtung für Lichtstrahlen innerhalb der Kapillaren, die den Resonator eines Laserwendekreisels bilden. Diese Vorrichtung, die auf dem Substrat eines Spiegels des genannten Laserkreisels plaziert ist, verwendet eine Maske (21), die mit Öffnungen (50) durchbohrt ist und formschlüssig ist mit der Rückseite des genannten Substrats. Die Lichtenergien (41), die durch jede Öffnung (50) gehen, hängen direkt von der Position des Lichtstrahls (16) auf dem Spiegel (3) und im Resonator ab. Die Messung dieser Lichtenergien durch eine photoelektrische Zelle (22) erlaubt die präzise Bestimmung der Position des Laserstrahls

Die Erfindung ist auf jeden Laser und besonders Laserkreisel anwendbar.

Fig. 4

## Positionsmeßvorrichtung für Lichtstrahlen für Laserwendekreisel

Die vorliegende Erfindung betrifft eine präzise Positionsmeßvorrichtung für Lichtstrahlen, die von einem Laser ausgegeben werden, im speziellen einem Laserkreisel. Eine solche Vorrichtung kann verwendet werden, um die Position der genannten Strahlen im Inneren des Resonators, in dem sie erzeugt werden, nachzuführen und so die Leistungen des Laserkreisels zu verbessern. Sie ist ist anwendbar bei allen Laserkreiseln, seien diese dreieckig oder quadratisch, ein- oder mehrachsig, aber auch bei Lasern als solchen.

Die Laserkreisel umfassen im allgemeinen:
- einen optischen Block aus isolierendem Material mit geringem Ausdehnungskoeffizienten, in dem eine optische Strecke realisiert ist, die meistens dreieckig oder quadratisch ist und durch drei oder vier Spiegel begrenzt wird und bei der das Ganze einen optischen Resonator bildet;
- ein verstärkendes Medium, das in dem optischen Resonator zwei Lichtwellen erzeugt, die gegenläufig umlaufen, wobei die Interferenzen zwischen diesen beiden Wellen die Messung der Drehung des Laserkreisels um eine Achse erlauben, die senkrecht zur Ebene der optischen Strecke steht;
- eine Überlagerungsvorrichtung der Lichtwellen zum Erzeugen von Interferenzstreifen auf einem Satz von photoelektrischen Zellen, wobei der Durchlauf der genannten Streifen die Drehung des Laserkreisels darstellt, und der Durchlauf von den photoelektrischen Zellen in verwendbare elektrische Signale umgewandelt wird;
- gegebenenfalls Mittel für einen mechanischen Antrieb, die es gestatten, den optischen Block in Bezug auf seine Halterung zum Schwingen zu bringen, um den bekannten Lock-in-Effekt zwischen den beiden Lichtwellen zu vermeiden;
- Nachführmittel von der Länge des Resonators, die so angeordnet sind, daß die Resonanzfrequenz des optischen Resonators der entspricht, für die die Verstärkung des verstärkenden Lichtmediums maximal ist;

Damit ein solcher Laserkreisel richtig funktioniert, ist es wichtig, daß die Position und die Ausrichtung der Flächen, auf denen die Spiegel befestigt sind, so genau als möglich ist in bezug auf die Lage der Kanäle, in denen die Laserstrahlen erzeugt werden und umlaufen. Da es schwierig ist, diese Genauigkeit perfekt zu erreichen, sind die Leistungen der Laserkreisel nicht immer optimal und die Kosten der Realisierung bleiben hoch. Es scheint interessant, die Laserstrahlen mittels Nachführung in den Kanälen des optischen Blocks zu positionieren und zwar durch den Einsatz von Spiegeln, die nach einer oder mehreren Achsen geneigt werden können. Eine solche Nachführung kann aber nur richtig gemacht werden, wenn die Lage der Laserstrahlen mit großer Genauigkeit in bezug auf den optischen Block gemessen wird. Die gesuchte Genauigkeit liegt in der Größenordnung einiger μ.

Es wurden verschiedene Lösungen vorgeschlagen, um diese Positionsmessungen durchzuführen. Dabei werden meistens doppelte oder vierfache photoelektrische Zellen verwendet, die außerhalb des Laserkreisels vor einem oder mehreren Spiegeln aufgestellt werden und auf denen ein kleiner Teil des Lichts der Laserstrahlen ankommt. Die Differentialmessung der Lichtstärken, die von den genannten Zellen empfangen werden, ergibt eine Information über die Position der Strahlen bezogen auf den optischen Block. Ein größerer Nachteil liegt in der Befestigung der photoelektrischen Zellen, die Zwischenteile verwenden, die im allgemeinen aufgeklebt werden. Bei Temperaturveränderungen bleiben die Zellen nicht ganz fixiert in bezug auf den optischen Block und die Meßgenauigkeit ist mittelmäßig.

Die Bedeutung der vorliegenden Erfindung liegt in der Tatsache, daß die Meßgenauigkeit verbessert wird durch das Vorhandensein einer Maske, die mit Öffnungen versehen ist und direkt auf dem Substrat des Spiegels und außerhalb angebracht ist und eingefügt ist zwischen den Laserstrahlen und den photoelektrischen Positionsmeßzellen der genannten Strahlen. Die Öffnungen dieser Maske, von denen sich jede in der Bahn zu einer Zelle befindet, definieren mit Präzision die Lichtenergie, die auf jede Zelle fällt. Die Form und Fläche der Öffnungen wird so gewählt, daß das Licht, das durch sie hindurchgeht, einen ganzen Fleck bildet, der im Inneren der Oberfläche der entsprechenden Zelle eingeschlossen ist. Die Position der Zelle kann also leicht schwanken, ohne daß die Spannung, die sie liefert sich ändert. Die Genauigkeit des Systems hängt somit von der Stabilität der Maske ab, die sehr groß sein kann.

Ausführungsbeispiele der Erfindung werden im folgenden als Beispiele beschrieben, mit Hinweis auf die beigefügten Zeichnungen. Es zeigen

Fig. 1 ist eine Draufsicht eines Laserkreisels nach dem Stand der Technik,

Fig. 2 ist eine Draufsicht auf einen Laserkreisel, ausgestattet mit winkelmäßig einstellbaren Spiegeln und Positionsmeßmitteln für die Strahlen im Resonator.

Fig. 3 ist eine Seitenansicht und eine axiale Schnittansicht eines Laserkreiselspiegels, bestückt mit einer Positionsmeßvorrichtung für Laserstrahlen im Resonator gemäß der Erfindung.

Fig. 4 ist eine Draufsicht und eine axiale Schnittansicht des Spiegels und der Vorrichtung von Fig. 3.

Fig. 5 ist eine Ansicht der Maske der Positionsmeßvorrichtung für Laserstrahlen gemäß der Erfindung.

Fig. 6 ist eine Seiten- und eine axiale Schnittansicht eines beweglichen und winkelmäßig einstellbaren Laserkreiselspiegels, der bestückt ist mit einer Positionsmeßvorrichtung für Laserstrahlen im Resonator gemäß der Erfindung.

Fig. 7 ist eine Drauf- und axiale Schnittansicht des Spiegels und der Vorrichtung von Fig. 6.

Fig. 8 ist eine schematische Darstellung, die die Wechselwirkung zwischen einem Laserstrahl und der Maske von Fig. 5 zeigt.

Fig. 9 zeigt die Energie eines Strahls, der nach Durchgang durch die Maske von Fig. 5 auf die photoelektrischen Zellen fällt.

Die Fig. 10 und 11 zeigen Ausführungsvarianten der Maske von Fig. 5.

Fig. 12 zeigt als Drauf- und axiale Schnittansicht eine Variante der Positionsmeßvorrichtung für Laserstrahlen gemäß der Erfindung, bei der die Maske direkt auf dem Spiegel des Laserkreisels ausgeführt ist.

Fig. 13 ist eine schematische Darstellung, die die Wechselwirkung zwischen einem Laserstrahl und der Maske von Fig. 5 zeigt.

Fig. 14 ist eine Schnittansicht eines Spiegels des Laserkreisels, in dem eine Maske gemäß der Erfindung eingebaut ist.

Fig. 15 ist eine Variante der Maske bei der die Spalte um 45 Grad versetzt sind.

Fig. 16 ist eine Ausführungsform eines Laserkreiselspiegels, bei dem die Spalte durch Aussparungen ersetzt sind.

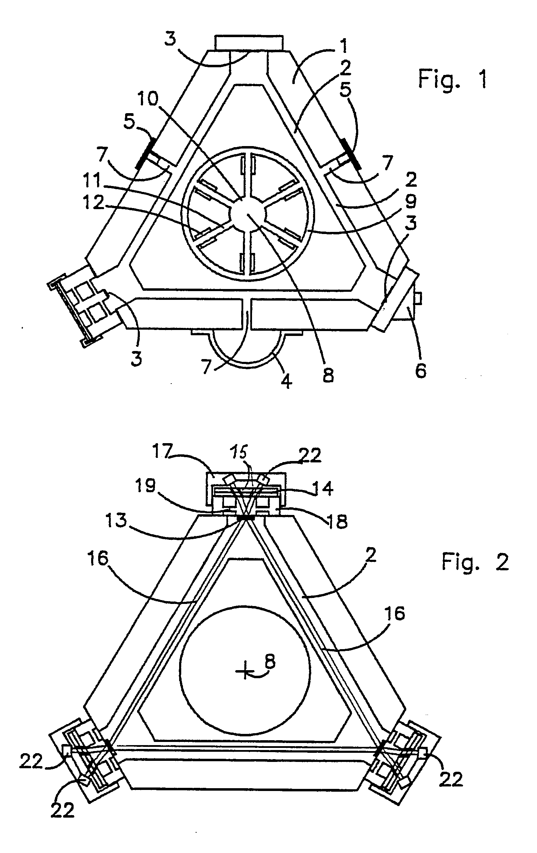

Wie schon vorher erwähnt und so wie es Fig. 1 zeigt, umfasst ein Laserkreisel im besonderen:
- einen optischen Block 1 aus einem isolierenden und heliumdichten Material, im allgemeinen eine glasartige Keramik des Typs "Zerodur", in das Kanäle 2 gebohrt sind, die abgeschlossen werden durch Spiegel 3, von denen mindestens einer beweglich ist und die mit den genannten Kanälen 2 eine optische Strecke bilden, im Falle von Abb. 1 eine dreieckige, die aber jede andere Form haben kann, wobei ein und der selbe optische Block mehrere optische Strecken enthalten kann. Solch eine optische Strecke bildet einen optischen Resonator.
- Spiegel 3, von denen mindestens einer in einer Richtung senkrecht zu seiner Ebene beweglich ist. Diese Spiegel bestehen im allgemeinen aus einem polierten Substrat, auf das ein Stapel von multidielektrischen Schichten aufgebracht ist, die den reflektierenden Teil des Spiegels bilden.
- ein Ausgabesystem der Informationen, das sich auf einem der Spiegel 3 befindet und mindestens ein Überlagerungsprisma 6 umfasst und eine Anzahl von photoelektrischen Zellen 7; wobei der genannte Spiegel teildurchlässig ist, d.h. er läßt einen Teil des Lichts, das er reflektieren soll, durch.
- eine oder zwei Kathoden 4, die auf dem optischen Block 1 angebracht sind.
- eine oder zwei Anoden 5, die ebenfalls auf dem optischen Block 1 angebracht sind.

Diese Kathoden und Anoden bilden die Elektroden des Laserkreisels und sind mit den Kanälen 2 durch die Anschlußkanäle 7 verbunden.

Der optische Block 1 ist mit einem Gasgemisch gefüllt, im allgemeinen auf der Basis von Helium und Neon. Ein elektrischer Strom, der zwischen den Elektroden fließt, regt dieses Gasgemisch an und erzeugt ein Plasma in den Anschlußkanälen 7 und den Kanälen 2, das durch Verstärken des Lichts den Lasereffekt erzeugt; es entstehen zwei Lichtwellen, die gegenläufig im optischen Resonator umlaufen.

Dieser optische Block ist um eine Achse 8 schwingend montiert und wird mittels eines Aktivierungsrades in Schwingung gesetzt. Dieses besteht z.B. aus einem äußeren Kranz 9, einer zentralen Nabe 10 und aus elastischen Speichen 11, auf die die piezoelektrischen Keramiken 12 aufgeklebt sind.

Fig. 2 zeigt zur Information einen optischen Block des Laserkreisels, der mit drei Spiegeln 13 versehen ist, die linear in Richtung der Achse 8 verschoben werden können und winkelmäßig um die beiden Achsen verdreht werden können, die in ihrer Reflexionsebene liegen. Dafür werden die Spiegel nach bekannter Technik auf Substraten 18 aufgebracht, die eine dünne Membran 19 enthalten. Die Bewegungen werden ausgelöst durch Antreiber 14, die mittels piezoelektri scher Keramiken ausgeführt sind. Diese Antreiber sind jeweils mit zwei Löchern 15 versehen und die Spiegel haben einen Übertragungskoeffizienten der Größenordnung von 0,0001 bis 0,0003. Das verstärkende Medium, das sich in den Kanälen 2 befindet, erzeugt zwei Laserstrahlen 16. Ein Teil der Energie dieser Strahlen geht durch die Spiegel hindurch und fällt auf die photoelektrischen Zellen 22, die in Halterungen 17 befestigt sind, die wiederum auf den Substraten 18 oder direkt auf dem optischen Block 1 befestigt sind.

In der Praxis wird man nur eine Zelle mit vier Quadranten auf jedem Spiegel verwenden, womit man die Position der Strahlen messen will. Es gilt festzuhalten, daß die Positionsmessung der Strahlen im Resonator einer Messung ihrer Position auf dem Spiegel 3 oder auf der Zelle mit den vier Quadranten gleichkommt, wenn diese genügend fest ist.

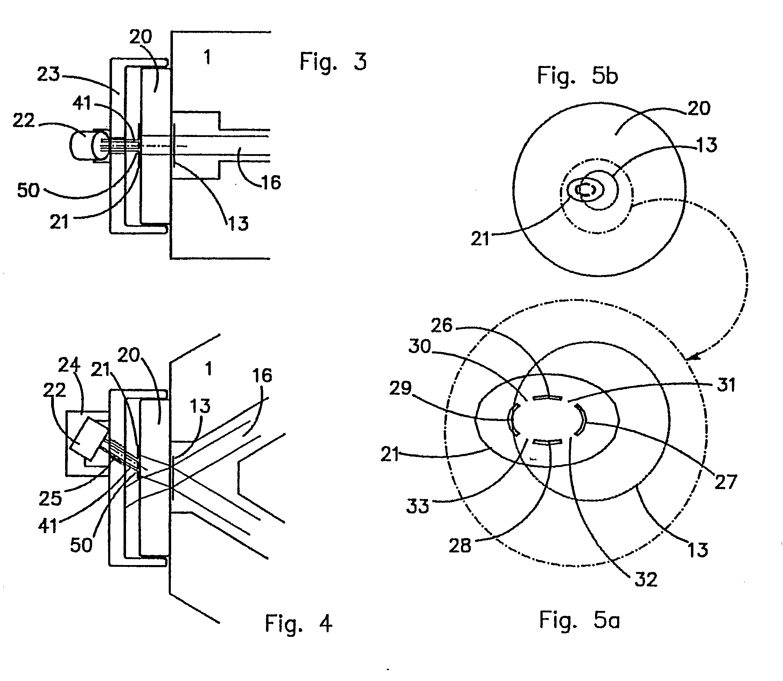

Die Fig. 3 und 4 zeigen die Vorrichtung gemäß der Erfindung, angewendet auf einen festen Laserkreiselspiegel. Man sieht dort nacheinander:
- den optischen Block 1
- ein Substrat 20, von ziemlich zylindrischer und flacher Form, das auf der Seite zum optischen Block hin, einen Spiegel 3 trägt.
- eine Maske 21, formschlüssig mit der äußeren Seite des Substrats 20 und so angebracht, daß sie zumindest einen Lichtstrahl des Laserkreisels abfängt.
- eine photoelektrische Zelle 22, vorzugsweise mit vier Quadranten.

Die Maske 21 ist mit mindestens einer, vorzugsweise vier Öffnungen 50 versehen, die alle möglichen Formen haben können, die aber günstigerweise eine Form haben, die der Vorrichtung, so wie sie im folgenden beschrieben wird, die beste Leistungsfähigkeit sichert.

Diese Zelle wird gehalten von einem Teil 24, das auf einer Abdeckung 23 befestigt ist, die selbst auf das Substrat 20 aufgeklebt ist. Diese Abdeckung 23 ist mit einer Öffnung 25 versehen, vorzugsweise geneigt und so angebracht, daß der Strahl 16, nachdem er die Maske passiert hat, durch die genannte Öffnung 25 gehen und auf die Zelle 22 fallen kann.

Die Abdeckung 23 kann alle möglichen Formen haben und kann direkt auf den optischen Block 1 geklebt werden.

Diese Abdeckung kann auch weggelassen werden und dann wird das Teil 24 oder sogar die Zelle 22 direkt auf das Substrat 20 geklebt.

Die Maske 21 kann auf verschiedene Weise realisiert werden, vorzugsweise in absorbierenden Materialien. Sie wird am besten durch Niederschlag realisiert, zum Beispiel im Vakuum oder durch Siebdruck direkt auf die äußere Fläche des Substrats 20.

Fig. 5 b zeigt die äußere Fläche des Substrats 20 auf der die Maske 21 befestigt oder durch Niederschlag aufgebracht ist. Die Kontour der Maske, hier ellipsenförmig, kann jegliche Form haben, vorausgesetzt ihre Abmessungen sind größer als die des Laserstrahls, dessen Position gemessen werden soll.

Fig. 5 a zeigt in vergrößerter Form eine bevorzugte Ausführung der Öffnungen der Maske 21. Diese Öffnungen, vier an der Zahl, 26, 27, 28 und 29, wenn man eine Zelle mit vier Quadranten nimmt, haben die Form eines schmalen, elliptischen Spaltes. Das Verhältnis zwischen dem großen und dem kleinen Durchmesser dieser Ellipse ist gleich 1/cos (30 $^\circ$) bei gleichseitigen, dreieckigen Laserkreiseln und 1/cos (45 $^\circ$) bei quadratischen Laserkreiseln.

Der elliptische Spalt wird von vier vollen Zonen 30, 31, 32 und 33 unterbrochen, deren Länge ungefähr gleich der Hälfte der eines Spaltes ist. Die Längen jedes Spalts sind so, daß seine Projektionen auf eine um 30 Grad in bezug auf die Maskeneben geneigt Oberfläche ziemlich gleich groß sind. Die Breite des Spalts kann ebenfalls als Funktion des gleichen Projektionskriteriums auf einer um 30 Grad geneigten Ebene moduliert werden.

Die Positionen der vier vollen Zonen sind so, daß sie, wenn sie auf eine Ebene von 30 Grad projiziert würden, zentriert wären auf Geraden, die um 45 Grad geneigt sind in bezug auf eine Ebene, die vom Resonator des Laserkreisels definiert wird.

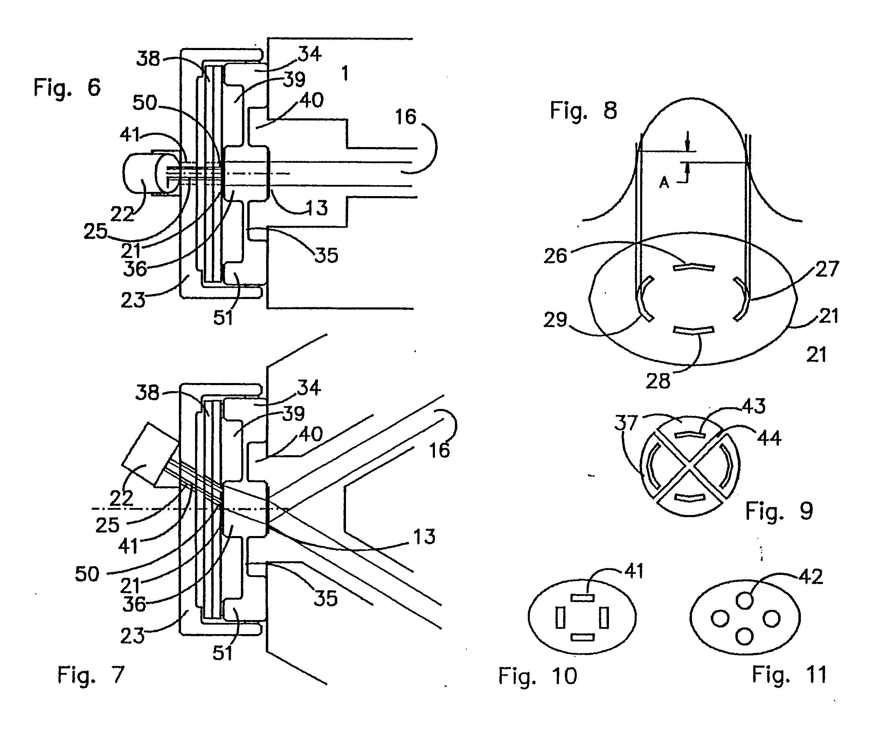

Fig. 8 ermöglicht ein besseres Verständnis der Funktionsweise und der Bedeutung der Meßvorrichtung. In Fig. 8 stellt die Kurve die Gaußsche Vertielung der Energie des Laserstrahls entlang seines Durchmessers dar. Wenn der Strahl die Maske 21 trifft, sofern er zentriert ist in bezug auf diese Maske, dann entspricht das Energieniveau, das die Spalte passiert annähernd der Hälfte der Spitzenleistung des Strahls. Die Energien, die jeden Spalt passieren sind identisch. Wenn der Strahl dezentriert ist, dann sind die Energien unterschiedlich und die Energieabweichung A in der Fig. ist repräsentativ für die Dezentrierung.

Fig. 9 zeigt die Lichtflecken 43, die der Laserstrahl nach dem Durchgang durch die Maske 21 auf einer Zelle mit vier Quadranten 37, die getrennt sind durch ein kreuzförmiges Zwischenteil 44, erzeugt. Man versteht leicht, daß, selbst dann, wenn die Zelle ungenau zentriert ist in bezug auf den Strahl, die Gesamtenergie, die jeder Quadrant empfängt, nur von der Art und Weise abhängt, in der der Strahl die Maske 21 passiert. Wenn die Empfindlichkeit jedes Quadranten gleichmäßig ist auf seiner ganzen Oberfläche, dann sind die Signale konstant, die von den genannten Quadranten abgegeben werden, selbst wenn die gesamte photoelektrische Zelle sich aufgrund der Temperatur oder aufgrund von Schwankungen der Klebestellen verschiebt. Somit also wird die Genauigkeit der Positionsmessung des Strahls in den Kapillaren nur von der Stabilität der Lage der Maske abhängen, eine Stabilität, die sehr groß ist aufgrund der Art, wie sie auf dem Substrat befestigt und somit mit dem Block 1 verbunden ist.

Die Fig. 6 und 7 zeigen die Anwendung der Vorrichtung an einem beweglichen Spiegel, der eine Translationsbewegung ausführen kann und hinsichtlich der Winkel einstellbar ist.

In dieser Anwendung wird das volle Substrat 20 von Fig. 3 ersetzt durch ein Substrat 34, das eine dünne Membran 35 enthält, die mittels zweier Aussparungen 39 und 40, die symmetrisch sein können, erzeugt ist; ein Mittelteil 36 hat zylindrischer Form und kann sich bewegen und in Abhängigkeit der Kräfte drehen, die ein Antrieb aus piezoelektrischer Keramik 38 auf es ausübt. Im vorliegenden Fall hat die Aussparung 39, die sich am weitesten außen in Form eines zylindrischen Kranzes befindet, einen äußeren Durchmesser, der größer ist als der der Aussparung 38, die neben dem optischen Block 1 liegt. Das Substrat 34 hat somit auf der äußeren Seite ein kranzförmiges, ziemlich schmales Teil 51. Der äußere Teil des piezoelektrischen Antriebs 38 kann auf den genannten Kranz 40 geklebt werden oder durch jegliches andere Mittel am Substrat 35 oder am optischen Block 1 befestigt werden.

Das Mittelteil 36 trägt auf seinen planen Flächen an der inneren Seite zum Laserkreisel hin den Spiegel 3 und an der äußeren Seite eine Maske 21, so wie oben beschrieben.

Dieser Antrieb ist mit mindestens einem Kanal 41 versehen, der geneigt und so plaziert ist, daß der Durchlaß des Lichts des Laserstrahls, der die Maske 21 passiert hat, ermöglicht ist. Es wird vorzugsweise in seiner Mitte auf die äußere plane Fläche des Mittelteils 36 geklebt und teilweise auf die Maske 21, ohne daß jedoch der Klebstoff die vier Spalte der genannte Maske 21 verstopft.

Eine Abdeckung 23 mit einer Zelle 22 ist ebenfalls außen am Substrat angeklebt, sie kann aber vorteilhafterweise direkt auf dem optischen Block befestigt werden.

Fig. 10 zeigt eine vereinfachte Ausführungsweise der Maske 21, bei der die ellipsenförmigen Spalte durch vier rechteckige Öffnungen 41, vorzugsweise von länglicher Form, ersetzt und so angeordnet sind, daß ihre großen Abmessungen ein Rechteck bilden, dessen Abmessungen für einen dreieckigen, gleichseitigen Laserkreisel im Verhältnis 1/cos (30°) stehen.

Fig. 11 zeigt eine zweite vereinfachte Ausführungsweise der Maske 21, bei der die ellipsenförmigen Spalte durch vier fast runde Öffnungen 42 ersetzt sind, die so angeordnet sind, daß ihre Mittelpunkte auf einem Rhombus leigen, dessen diagonale Abmessungen für einen dreieckigen, gleichseitigen Laserkreisel im Verhältnis 1/cos (30°) stehen.

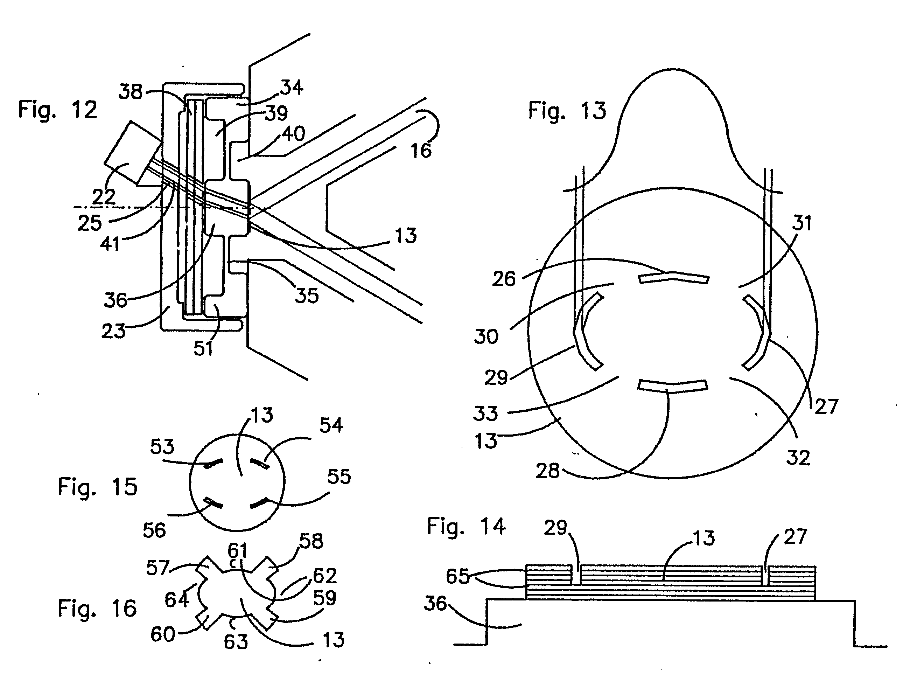

Fig. 12 zeigt eine Variante der Vorrichtung, bei der die Maske nicht mehr auf dem Substrat 20 oder 34 plaziert ist, sondern im Spiegel 13 eingebaut ist und somit in der Ebene des genannten Spiegels 13 liegt.

Fig. 14 zeigt solch einen Spiegel als Schnittansicht.

Die allgemein angewandte Technik für die Ausführung der Laserkreiselspiegel besteht darin, einen Stapel von Schichten, genannt multi-dielektrische Schichten, herzustellen.

Die Gestaltung der im Spiegel eingebauten Maske wird so gemacht wie in Abb. 14 dargestellt, indem an manchen Stellen eine oder mehrere der Schichten weggelassen werden, sei es auf der Ebene der ersten aufgebrachten Schichten, vorzugsweise aber auf der der letzten, um die Vertiefungen 27 und 28 zu bilden. Dieses Weglassen bewirkt, daß an den Stellen die Übertragung des Spiegels und somit die übertragene Energie erhöht wird.

Die interessanteste Lösung besteht darin, die Abmessungen der Ellipse zu erhöhen, in die die Vertiefungen 26, 27, 28 und 29 der Maske einbeschrieben werden, damit sie sich so weit als möglich an der Peripherie des Lichtstrahls befinden, wie es in Fig. 13 dargestellt ist; an den betroffenen Stellen sind alle oder fast alle Schichten weggelassen. Dann verhalten sich die vier ellipsenförmigen Spalte gegenüber dem Laserstrahl wie eine Modenbegrenzungsmembran. Es ist dann nicht mehr notwendig, diese im Resonator herzustellen.

Aufgrund dessen, daß die so im Mittelpunkt des Spiegels 13 ausgeführte Ellipse Zohen 30 - 33 umfasst, die reflektierend bleiben, besteht die Gefahr, daß die Membranwirkung unvollständig ist und es kann eine Laserschwingung mit höherem Mode auftreten. Um diesen Nachteil auszugleichen, ist es ausreichend, wenn einer der Spiegel in bezug auf den oder die anderen eine um 45 Grad versetzte Maske hat, so wie es Fig. 15 zeigt, wo der Spiegel ellipsenförmige Auslassungen der Schichten aufweist, die an der gleichen Stelle liegen wie die Zonen 30 und 33 der Fig. 13.

Die photoelektrische Zelle, die hinter diesem Spiegel liegt, ist ebenfalls um 45 Grad versetzt und die Signale, die von den vier Quadranten ausgehen, werden neu zusammengestellt, um die Positionsabweichungen entlang der Hauptachsen des Laserkreisels wiederherzustellen, nach einer bekannten Technik.

Fig. 16 schließlich zeigt eine äußere Spiegelform mit multi-dieleketrischen Schichten von etwa elliptischer Form, versehen mit 4 Verlängerungen 57 bis 60. Die Vertiefungen 61 bis 64, die zwischen den genannten Verlängerungen liegen, sollen die gleiche Aufgabe erfüllen wie die Fenster 26 bis 29 der Fig. 13 aufgrund der Tatsache, daß die Lichtstärke sehr schnell abnimmt, wenn wenn man sich von der Achse des Strahls 16 entfernt.


**Ansprüche**

1. Positionsmeßvorrichtung für Lichtstrahlen von Laserkreiseln mit:
- einem optischen Block (1), der mindestens einen optischen Resonator hat, der von mindestens drei Spiegeln geschlossen wird und in dessen Innerem mittels eines verstärkenden Mediums zwei gegenläufige Laserwellen erzeugt werden, wobei die genannten Wellen Laserstrahlen nach außen durch mindestens einen der Spiegel abstrahlen;
- mindestens einem beweglichen Spiegel mit piezoelektrischem Motor;

- einer Überlagerungsvorrichtung der Lichtwellen; dadurch gekennzeichnet, daß sie mindestens eine Maske mit mindestens einer, vorzugsweise vier Öffnungen (50) aufweist, daß diese Maske in der Bahn eines der Laserstrahlen liegt und die Öffnungen vorzugsweise symmetrisch auf ihr in bezug auf die Achse des Laserstrahls verteilt sind und daß die Öffnung(en) (50) so angeordnet ist (sind), daß bei dezentriertem Strahl (eine) unterschiedliche Lichtenergiemenge(n) diese passieren.

2. Positionsmeßvorrichtung für Lichtstrahlen von Laserkreiseln gemäß Anspruch 1, dadurch gekennzeichnet, daß sie eine Maske (21) aufweist, deren Öffnungen (50) in Form enger, elliptisch aussehender Spalten ausgeführt sind, die auf einem Umfang, der selbst ellipsenförmig ist, verteilt und durch lichtundurchlässige Zonen getrennt sind.

3. Positionsmeßvorrichtung für Lichtstrahlen von Laserkreiseln gemäß Anspruch 2, dadurch gekennzeichnet, daß die Maske (21) vier Öffnungen (50) in Form enger, elliptisch aussehender Spalten (26, 27, 28 und 29) aufweist, die auf einer Ellipse verteilt sind und durch 4 Zonen (30, 31, 32, und 33) getrennt sind, deren Länge annähernd gleich ist der Hälfte derjenigen der genannten Spalten (26, 27, 28 und 29).

4. Positionsmeßvorrichtung für Lichtstrahlen von Laserkreiseln gemäß Anspruch 1, dadurch gekennzeichnet, daß sie mindestens eine photoelektrische Zelle (22) umfasst, die mindestens eine empfindliche Fläche hat und vorzugsweise jedoch ebensoviele empfindliche Flächen wie die Maske (21) Öffnungen (50) aufweist und, daß die genannten empfindlichen Flächen so verteilt sind, daß das Licht des Laserstrahls, der eine Öffnung (50) der Maske (21) passiert hat, voll und ganz auf eine der empfindlichen Flächen der genannten photoelektrischen Zelle (22) fällt.

5. Positionsmeßvorrichtung für Lichtstrahlen von Laserkreiseln gemäß einem der Ansprüche 2 oder 3, dadurch gekennzeichnet, daß sie mindestens eine photoelektrische Zelle (22) umfasst, die mindestens eine empfindliche Fläche hat und vorzugsweise jedoch ebensoviele empfindliche Flächen wie die Maske (21) Öffnungen (50) aufweist und, daß die genannten empfindlichen Flächen so verteilt sind, daß das Licht des Laserstrahls, der eine Öffnung (50) der Maske (21) passiert hat, voll und ganz auf eine der empfindlichen Flächen der genannten photoelektrischen Zelle (22) fällt.

6. Positionsmeßvorrichtung für Lichtstrahlen vom Laserkreiseln gemäß einem der Ansprüche 2, 3 oder 5,

dadurch gekennzeichnet, daß die photoelektrische Zelle (22) vier Quadranten (37) hat, die durch eine kreuzförmigen Zwischenraum getrennt sind, der Stege hat, deren Breite kleiner ist als die Länge der lichtundurchlässigen Flächen (30 bis 33), die die ellipsenförmigen Öffnungen (26 bis 29) der Maske (21) trennen.

7. Positionsmeßvorrichtung für Lichtstrahlen von Laserkreiseln gemäß einem der Ansprüche 1 oder 4, dadurch gekennzeichnet, daß die Maske (21) Öffnungen (50) hat, die ziemlich rechteckig sind.

8. Positionsmeßvorrichtung für Lichtstrahlen von Laserkreiseln gemäß einem der Ansprüche 1 oder 4, dadurch gekennzeichnet, daß die Maske (21) kreisförmige Öffnungen (50) hat.

9. Positionsmeßvorrichtung für Lichtstrahlen von Laserkreiseln gemäß einem der vorhergenden Ansprüche, dadurch gekennzeichnet, daß sie sich auf einem beweglichen piezoelektrischen Spiegel befindet, zwischen einem piezoelektrischen Antrieb (38) und einem Mittelteil (36) eines Substrats, das die Halterung des genannten Spiegels bildet, wobei das genannte Mittelteil (36) beweglich wird durch eine Membran (35), die durch zwei Aussparungen in runden Kränzen (39 und 40) realisiert sind, von denen der der weitesten außen am Laserkreisel sitzt, einen Durchmesser hat, der größer ist als der des anderen.

10. Positionsmeßvorrichtung für Lichtstrahlen von Laserkreiseln gemäß einem der vorhergenden Ansprüche, dadurch gekennzeichnet, daß die Öffnungen (50) der Maske (21) direkt auf dem Spiegel (3) in Form elliptischer Spalte (26 bis 29) ausgeführt sind, von der Länge der Abmessung einer Ellipse, die vorzugsweise der des äußeren Durchmessers des Laserstrahls angenähert ist, wobei die Spaltwirkung dadurch erzielt wird, daß an manchen Stellen mindestens eine der multi-dielektrischen Schichten weggelassen wird, die den Spiegel bilden.

Fig. 1

Fig. 2

Fig. 5b

20
13
21

Fig. 5a

31
27
13
32
26
30
29
21
33
28

Fig. 3

20
16
13
23
41
22
50
21

Fig. 4

16
13
1
24
21
20
22
25
41
50

Fig. 6

Fig. 7

Fig. 8

Fig. 9

Fig. 10

Fig. 11

EP 0 390 180 A2

Fig. 12

38 34 39 40 16 22 25 41 36 23 51 35 13

Fig. 13

26 30 29 33 13 28 31 27 32

Fig. 15

53 13 54 55 56

Fig. 16

57 61 58 64 62 59 60 63 13

Fig. 14

29 13 27 65 36

EP 0 390 180 A2